Europäisches Patentamt

European Patent Office

Office européen des brevets

(11) Publication number: **0 459 503 A2**

# EUROPEAN PATENT APPLICATION

(21) Application number: **91108899.5**

(22) Date of filing: **31.05.91**

(51) Int. Cl.5: **H01S 3/08**, H01S 3/106, H01S 3/134, H01S 3/136, G02B 27/28

(30) Priority: **01.06.90 JP 143448/90**

(43) Date of publication of application:
**04.12.91 Bulletin 91/49**

(84) Designated Contracting States:
**AT BE CH DE DK ES FR GB GR IT LI LU NL SE**

(71) Applicant: **MITSUI PETROCHEMICAL INDUSTRIES, LTD.**
**2-5, Kasumigaseki 3-chome Chiyoda-ku Tokyo(JP)**

(72) Inventor: **Terada, Mitsugu, c/o Mitsui Petrochem. Ind. Ltd.**
**580-32, Aza-Taku 2-gou, Nagaura Sodegaura-shi, Chiba(JP)**
Inventor: **Ohmata, Ken, c/o Mitsui Petrochem. Ind. Ltd.**
**580-32, Aza-Taku 2-gou, Nagaura Sodegaura-shi, Chiba(JP)**
Inventor: **Uehara, Michito, c/o Mitsui Petrochem. Ind. Ltd.**
**580-32, Aza-Taku 2-gou, Nagaura Sodegaura-shi, Chiba(JP)**
Inventor: **Shibata, Hideaki, c/o Mitsui Petrochem. Ind. Ltd.**
**580-32, Aza-Taku 2-gou, Nagaura Sodegaura-shi, Chiba(JP)**
Inventor: **Oeda, Yasuo, c/o Mitsui Petrochem. Ind. Ltd.**
**580-32, Aza-Taku 2-gou, Nagaura Sodegaura-shi, Chiba(JP)**
Inventor: **Terashi, Yuichiro, c/o Mitsui Petrochem. Ind. Ltd.**
**580-32, Aza-Taku 2-gou, Nagaura Sodegaura-shi, Chiba(JP)**

(74) Representative: **Ritter und Edler von Fischern, Bernhard,Dipl.-Ing. et al**
**HOFFMANN - EITLE & PARTNER**
**Arabellastrasse 4**
**W-8000 München 81(DE)**

(54) **Narrow band excimer laser apparatus.**

(57) Within a resonator, a polarizer for linearly polarizing an oscillation laser beam is provided and a birefringence filter for forming the oscillation laser beam into narrow band is arranged.

Accordingly, in forming an excimer laser into narrow band, no possible damage of an optical system is present, an oscillation output is not lowered, and a laser of high efficiency can be provided.

FIG.1

## BACKGROUND OF THE INVENTION

The present invention relates to the art of a laser apparatus in which an oscillation wavelength is formed into a narrow band.

Recently, attention has been paid to a laser beam as a light source for various industries. Among them, an application of the laser beam to a lithography light source used in a process of producing semiconductors, that is, an exposure light source for printing a semiconductor circuit pattern onto a silicon wafer is particularly promising.

Incidentally, with the recent high integration of semiconductors, formation of short wavelength of the lithography is essential, and an excimer laser having a short wavelength is significant. Lasers under study for this application include a KrF laser having an oscillation wavelength of 248 nm and an ArF laser having a wavelength of 193 nm. It is necessary for these lasers to make the oscillation wavelength narrow band to the wavelength band width of the order of pm ($= 10^{-12}$ m).

In the past, the formation of the excimer laser into narrow band is achieved by the following process.

Generally, the excimer laser has an oscillation mechanism in which a high voltage discharge is generated in a container filled with laser gases, and molecules in the excited state generated at the time of discharge are used as media. The formation of the laser into narrow band is achieved by a method for replacing a total reflecting mirror, among mirrors constituting a resonator, with a diffraction grid, and a method for inserting an etalon into a resonator.

The method for using the diffraction grating and etalon as described above has a problem in that the diffraction grating and etalon constituting the resonator is damaged by the irradiation of powerful ultraviolet rays of the excimer laser. In the diffraction grating, a breakage of marking lines and reflecting coatings constituting the grid occurs. In the etalon, a breakage of the reflecting coating occurs.

Furthermore, in the method using the diffraction grid and etalon, working technique of high precision is required in forming a resonator. Because of this, the cost increases, impairing the practical use.

In the case where the non-narrow band state is outputted 100% and in the case where the narrow band is attained by the diffraction grating the output falls to 10%; and in the case where the narrow band is attainted by the etalon, the output falls to 20%.

## SUMMARY OF THE INVENTION

The present invention has been attained in view of the foregoing. The present invention has its task, in forming an excimer laser into narrow band, to eliminate a possible damage of an optical system, not to increase the cost and not to lower the oscillation output.

In order to solve the aforesaid task, the present invention has employed the following means.

In the narrow band excimer laser according to the present invention, the resonator is interiorly provided with a polarizer for linearly-polarizing an oscillation laser beam and a birefringence filter for making the oscillation laser beam into narrow band.

The excimer laser is the laser using as a laser medium excimer which is named generically an excited dimer in which atoms and molecules in the excited state are bonded with those in a separate state.

The kinds of excimer include rare gas excimer such as $Ar_2$, $Kr_2$ and $Xe_2$; rare gas halide excimer such as ArCl, ArF, KrCl, KrF, $Kr_2$ F, XeBr, XeCl, $Xe_2$ Cl and XeF; mercury halide excimer such as HgI, HgBr and HgCl; and rare gas oxygen excimer such as XeO and KrO.

In the excimer laser, the aforesaid media (for example, Kr and $F_2$ in the KrF excimer) and buffer gas (Ne or He) are sealed into a laser chamber under a few atmospheric pressures, high voltage pulse discharge is effected by an exciting circuit or an electron beam is irradiated to obtain a laser excited light, which is oscillated between a total reflecting mirror and an output mirror.

The birefringence filter is an optical element which can select wavelengths by use of the birefringence property of an anisotropic optical crystal.

In anisotropic optical crystals such as rock crystal and calcite, passed ordinary light and extraordinary light are propagated at different speeds. When linear polarization is incident upon an optical crystal at an angle of 45° with respect to an axis of the optical crystal, the maximum permeability is obtained when a phase difference between the ordinary light and extraordinary light in the crystal is a positive number fold of $2\pi$.

In other phase differences, an oval polarization results, and the permeability is lowered by adding a polarizing plate.

The birefringence filter comprises an anisotropic optical crystal and a polarizing plate.

However, there is a birefringence filter which has no polarizing plate. The birefringence filter has an anisotropic crystal which is set to the Brewster's angle to omit the polarizing plate.

The contrast in the magnitude of the permeability of the anisotropic optical crystals as mentioned above is utilized to select the wavelengths.

That is, the selection of the wavelengths by the birefringence filter results from the occurrence of a phase difference between the ordinary ray and extraordinary ray in the relationship between the thickness of the optical crystal and the wavelength of the incident light.

1) The light having a wavelength in which a phase difference is a positive number fold of $2\pi$ is emitted as a linear polarization from the crystal and passes through the polarizing plate without much loss.

2) The light having other wavelength is converted into an oval polarization, and therefore, most intensity is cut by the polarizing plate.

Accordingly, only the light having the wavelength determined by the thickness of the crystal passes through, and the light having other wavelength does not pass through, which is used to select the wavelengths.

A riofilter as one of the birefringence filters has a fundamental construction in which a crystal plate is installed between two polarizing plates, and when light is allowed to pass, an interference stripe appears corresponding to the change in wavelength. Crystal plates having thicknesses of d, 2d, 4d ... are sandwiched between polarizing plates, respectively, which are then placed one upon another. Then the interference stripes are also placed one upon another and a sharp peak remains. And a band pass filter having 1 Å or so can be prepared.

Furthermore, as the other birefringence filter, there is a sorfilter which has a construction in which some and the same thickness birefringence crystal plates are arranged between two polarizers, whose permeability is higher than that of the riofilter. The height of a small peak in the vicinity of a main peak is about 2.5 times of that of the riofilter.

In the present invention, the excimer laser linearly polarized by the polarizer is selected in wavelength by the birefringence filter and formed into the narrow band.

The birefringence filter has the construction in which a plurality of anisotropic optical crystals are placed one upon another, which need not be provided with coating which is low in damage resistance, and the polishing precision of the surface thereof required is not so as high as required by the etalon.

When the aforesaid birefringence filter is added to the excimer laser for use, it is possible to reduce the loss given to the laser oscillation output.

The present invention can be used for the whole excimer laser but can be suitably used for the KrF laser and ArF laser which have the task of long life and high efficiency particularly for use with the semiconductor industry.

Being the present invention constructed as described above, there is no possible damage of the optical system in forming the excimer laser into narrow band.

Moreover, the laser without lowering the oscillation output and having a high efficiency can be provided.

Furthermore, the birefringence filter need not to have coating which is low in damage resistance, and in addition, the polishing precision of the surface required is not so high as required by the etalon, thus realizing a low cost.

## BRIEF DESCRIPTION OF THE DRAWINGS

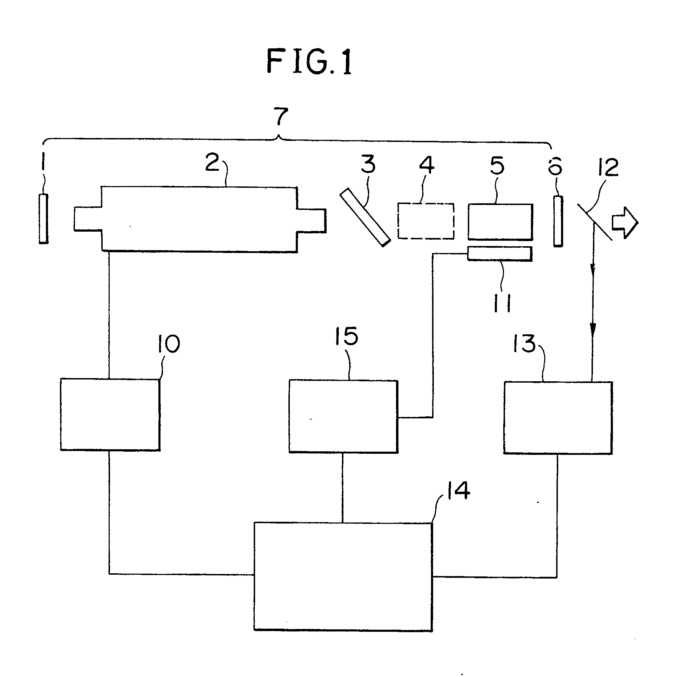

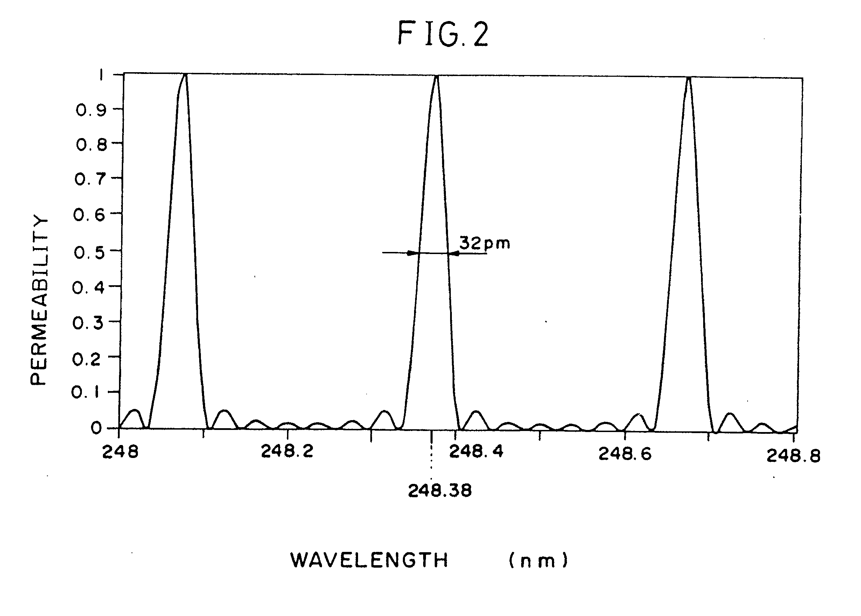

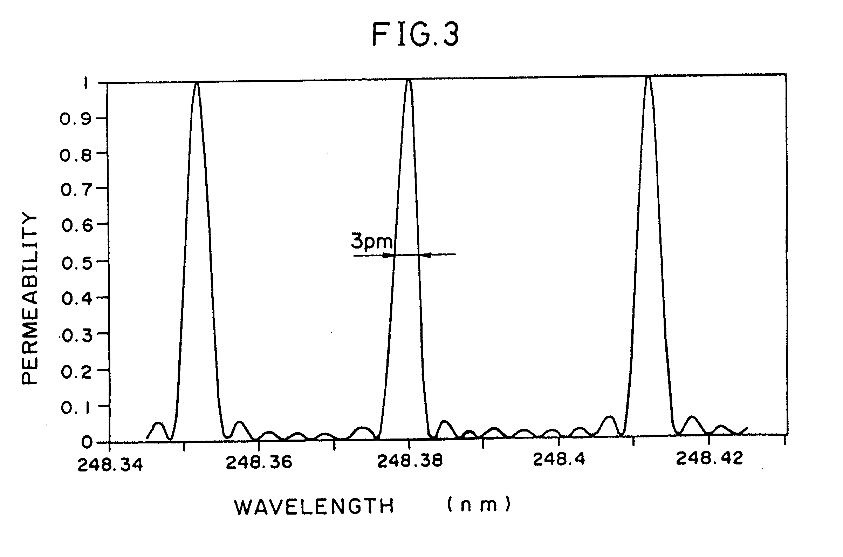

Fig. 1 is a block diagram showing one embodiment of the present invention, and Figs. 2 and 3 are graphic representations showing the wavelength dependability of the permeability of the birefringence filter used in the embodiment.

## DESCRIPTION OF PREFERRED EMBODIMENTS OF THE INVENTION

One embodiment of the present invention will be described hereinafter with reference to the drawings.

As shown in Fig. 1, a total reflecting mirror 1, a laser chamber having windows at both ends, a polarizer 3, a beam forming optical system 4, a birefringent filter 5 and an output mirror 6 are arranged on one axis to form a resonator 7. The aforesaid beam forming optical system 4 is an optical system for magnifying or reducing a beam pattern of laser beam adjusting to an aperture of the birefringence filter 5.

A laser power source and a gas supply device 5 are connected to the laser chamber 2, and an actuator 11 for rotating the birefringent filter is provided along the birefringent filter 5.

A beam splitter 12 is arranged ahead of the output mirror 6, and a part of the laser beam divided by the beam splitter 12 is introduced into a wavelength detector 13.

The wavelength data from the wavelength detector 13 is inputted into a control computer 15 through an interface 14. The control computer 15 encases therein a drive circuit for the actuator 11 so that the actuator 11 is driven in response to the wavelength data to rotate the birefringent filter 5 to vary an incident angle of the laser beam into the birefringent filter 5.

The control computer 15 is connected to the laser power source and the gas supply device 10 through the interface 14 so that the applied voltage and amount of gas supplied are controlled.

Kr and $F_2$ as excimer and Ne as the buffer gas are supplied to the laser chamber 2. A voltage is applied to a discharge electrode in the laser chamber 2 to excite the laser beam.

The laser beam is linearly polarized by the polarizer 3 within the resonator 7, which is formed by the beam forming optical system 4 and incident upon the birefringent filter 5, formed into narrow band and then outputted from the output mirror 6.

A part of the laser beam outputted is divided and taken by the beam splitter 12 and measured in wavelength by the wavelength detector 13. The wavelength data is then inputted into the control computer 5 through the interface 14, and the birefringent filter 5 is rotated and controlled by the actuator 11 so as to have the target wavelength. Thereby, the laser oscillation wavelength can be stabilized into the desired wavelength.

The birefringent filter used in the present embodiment comprises a riofilter composed of three crystals, which are formed of magnesium fluoride, whose thickness are 13.2 mm, 26.3 mm and 52.7 mm, respectively. For the purpose of omitting the polarizing plates, the three crystals are set to the Brewster's angle. The wavelength dependability of the permeability of the birefringent filter is shown in Fig. 2, and the permeated wavelength widths are of the order 32 pm around 248.38 nm.

Accordingly, the KrF excimer laser beam can be formed into narrow band to 32 pm. This can be replaced with a roughness regulation etalon in the case where the narrow band is attained by two etalons in the excimer laser for lithography.

In case of the similar structure but using calcite as material with thicknesses of 7.2 mm, 14.5 mm and 29.0 mm, 3 pm of the permeated wavelength width is obtained around 248.38 nm as shown in Fig. 3.

This is the permeative characteristic capable of replacing with etalon for fine adjustment.

**Claims**

1. A narrow band excimer laser apparatus using an excimer and characterized in that a resonator is interiorly provided with a polarizer for linearly polarizing an oscillation laser beam and a birefringent filter for forming the oscillation laser beam into narrow band.

2. The apparatus according to claim 1, wherein the excimer of said narrow band excimer laser apparatus is selected from the group consisting of rare gas excimer, rare gas halide excimer, mercury halide excimer and rare gas oxygen excimer.

3. The apparatus according to claim 2, wherein the rare gas excimer is selected from the group consisting of $Ar_2$, $Kr_2$, and $Xe_2$; the rare gas halide excimer is selected from the group consisting of ArCl, ArF, KrCl, KrF, $Kr_2F$, XeBr, XeCl, $Xe_2$ Cl and XeF; the mercury halide excimer is selected from the group consisting of HgI, HgBr and HgCl; and the rare gas oxygen excimer is selected from the group consisting of XeO and KrO.

4. The apparatus according to claim 1, wherein said birefringent filter comprises a sorfilter in which a plurality of the same thickness birefringent crystal plates are arranged between two polarizing plates.

5. The apparatus according to claim 1, wherein said birefringent filter comprises a riofilter in which a crystal plate is installed between two polarizing plates.

6. The apparatus according to claim 1, wherein said birefringent filter comprises a riofilter consisting of crystal formed of magnesium fluoride, the crystal is set to the Brewster's angle, and a wavelength dependability of a light permeability is the permeated wavelength width of the order of 32 pm around 248.38 nm.

7. The apparatus according to claim 6, wherein said birefringent filter consisting three crystals whose thicknesses are 13.2 mm, 26.3 mm, and 52.7 mm.

8. The apparatus according to claim 1, wherein said birefringent filter comprises a riofilter consisting of crystal formed of calcite, the crystal is set to the Brewster's angle, and a wavelength dependability of a light permeability is the permeated wavelength width of 3 pm around 248.38 nm.

9. The apparatus according to claim 8, wherein said birefringent filter consisting three crystals whose thicknesses are 7.2 mm, 14.5 mm and 29.0 mm.

10. The apparatus according to claim 1, wherein birefringent filter comprising an anisotropic optical crystal and a polarizing plate, a linear polarization is incident upon the crystal at an angle of 45° with respect to a crystal axis of the optical, the maximum permeability is attained when a phase difference between the ordinary light and extraordinary light within the crystal is a positive number fold of $2\pi$, and at other phase differences, it is converted into an oval polarization, the permeability of the oval polarization is lowered by the polarizing plates.

# FIG.1

# FIG.2

EP 0 459 503 A2

# FIG.3

EP 0 459 503 A2